# EUROPEAN PATENT APPLICATION

(11) **EP 3 493 552 A1**
(43) Date of publication of application: **05.06.2019**
(21) Application number: 17306661.4
(22) Date of filing: 30.11.2017
(51) Int. Cl.: H04N 21/472, H04N 21/6587, H04N 21/81, H04N 21/845

(54) **METHOD FOR MANAGING A STREAMING PROCESSING OF A MULTIMEDIA VIDEO SPATIALLY TILED STORED ON A NETWORK EQUIPMENT, AND CORRESPONDING TERMINAL**

(71) Applicant: THOMSON LICENSING, 92130 Issy les Moulineaux (FR)
(72) Inventor: TAIBI, Charline, 35576 Cesson-Sévigné (FR); HUMBERT, Frédérique, 35576 Cesson-Sévigné (FR); BICHOT, Guillaume, 35576 Cesson-Sévigné (FR); HOUDAILLE, Rémi, 35576 Cesson-Sévigné (FR)
(74) Representative: Huchet, Anne

(57) **Abstract**

A terminal for managing a streaming processing of a multimedia video (10) spatially tiled (400) with a set of tiles and stored on a network equipment (300), a tile (400) covering a portion of a scene of the multimedia video, said multimedia video being temporally divided into a plurality of video segments (Segment 1, ..., Segment n), a video segment being further defined by a plurality of tile segments, each tile segment being associated with a tile (400) of the set of tiles,
which comprises one or more memories and one or more processors configured to:
- process (701) one or more tile segments of a current video segment (Segment 1, ..., Segment n) for delivering one or more first portions of the scene of the multimedia video comprising a part of the scene to be displayed through a current viewport (VP);
- upon receipt (702) of a command during the processing of the current video segment, retrieve (703) a halt image of the multimedia video associated with a given moment of the current video segment (Segment 1, ..., Segment n), said halt image being defined by one or more second portions comprising said one or more first portions.

## Description

### TECHNICAL FIELD

The present disclosure relates to the streaming of Virtual Reality (VR) multimedia content (such as VR 360° videos or VR panoramic videos) to an end device through a delivery network, and especially to a tile based video streaming.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

VR 360° video content captures a scene with a 360° angle horizontally (and 180° vertically) allowing the user to navigate (i.e. pan) within the scene for which the capture point is moving along the camera motion decided by an operator/scenarist. A spherical content is obtained through a multi-head camera, the scene being composed through stitching the camera's views, projecting them onto a sphere, mapping the sphere content onto a plan (for instance through an equi-rectangular projection) and compressing it through conventional video encoders.

VR 360° videos offer an immersive experience wherein a user can look around using a VR head-mounted display (HMD) or can navigate freely within a scene on a flat display by controlling the viewport with a controlling apparatus (such as a mouse, a remote control or a touch screen).

Such a freedom in spatial navigation requires that the whole 360° scene is delivered to a player (embedded within the HMD or TV set) configured to extract the video portion to be visualized depending on the position of the viewport within the scene. Therefore, a high throughput is necessary to deliver the video.

The majority of known solutions streaming VR 360° videos provides the full 360° scene to the end device, but only less than 10% of the whole scene is presented to the user. Since delivery networks have limited throughput, the video resolution is decreased to meet bandwidth constraints.

As of today, a high end streaming service requires a maximum bandwidth capacity for streaming 4K:UHD (3840 x 2160 pixels) resolution that is around 15 to 25 Mbps. Streaming a 360° content with such resolution gives to the end-user a very poor experience as, at the end she will get less than 11 pixels horizontal per degree of field of view (a human is capable of 60° per degree of field of view). Through a TV offering e.g. a 60° field of view, the end user would face an horizontal resolution of 640 pixels (i.e. a VGA resolution).

Other known solutions mitigate the degradation of the video quality by reducing the resolution of the portion of the 360° scene arranged outside of the current viewport of the end device. Nevertheless, when the viewport of the end device is moved upon user's action to a low resolution area, the displayed video suffers from a sudden degradation.

This is why, for streaming high quality 360° content, one must rely on partial content streaming wherein the source content is split in portions (typically called tiles) and the portion that is down-stream to the end-user corresponds to its region of interest, i.e. the part that is accessible through the user's viewport.

The present disclosure has been devised with the foregoing in mind.

### SUMMARY

The present principles concern a method for managing, at a terminal, a streaming processing of a multimedia video spatially tiled with a set of tiles and stored on a network equipment, a tile covering a portion of a scene of the multimedia video, said multimedia video being temporally divided into a plurality of video segments, a video segment being further defined by a plurality of tile segments, each tile segment being associated with a tile of the set of tiles, said method comprising:
- processing one or more tile segments of a current video segment for delivering one or more first portions of the scene of the multimedia video comprising a part of the scene to be displayed through a current viewport;
- upon receipt of a command during the processing of the current video segment, retrieving a halt image of the multimedia video associated with a given moment of the current video segment, said halt image being defined by one or more second portions comprising said one or more first portions.

In an embodiment of the present principles, said halt image can correspond to the complete scene of the multimedia video.

In an embodiment of the present principles, the scene can be a 360° scene (so called spherical scene) or a panoramic scene.

In an embodiment of the present principles, the retrieving can comprise requesting said halt image to the network equipment.

In an embodiment of the present principles, the requesting of said halt image to the network equipment can comprise sending a picture identifier to the network equipment.

In an embodiment of the present principles, the halt image can be retrieved, at the network equipment, from a list of coded images associated with the current video segment.

In an embodiment of the present principles, the retrieving can comprise requesting one or more additional tile segments of the current video segment in order to build the requested halt image at the terminal.

In an embodiment of the present principles, the retrieving can comprise receiving, after sending one or more requests, one or more video frames extracted, by the network equipment, from corresponding tile segments of the current video segment.

The present principles also concern a terminal for managing a streaming processing of a multimedia video spatially tiled with a set of tiles and stored on a network equipment, a tile covering a portion of a scene of the multimedia video, said multimedia video being temporally divided into a plurality of video segments, a video segment being further defined by a plurality of tile segments, each tile segment being associated with a tile of the set of tiles. Said terminal comprises one or more memories and one or more processors configured to:
- process one or more tile segments of a current video segment for delivering one or more first portions of the scene of the multimedia video comprising a part of the scene to be displayed through a current viewport;
- upon receipt of a command during the processing of the current video segment, retrieve a halt image of the multimedia video associated with a given moment of the current video segment, said halt image being defined by one or more second portions comprising said one or more first portions.

In an embodiment of the present principles, said halt image can correspond to the complete scene of the multimedia video.

In an embodiment of the present principles, the retrieving comprises requesting said halt image to the network equipment.

Besides, the present principles further concern a method for streaming, from a network equipment, a multimedia video spatially tiled with a set of tiles and stored on the network equipment, a tile covering a portion of a scene of the multimedia video, said multimedia video being temporally divided into a plurality of video segments, a video segment being further defined by a plurality of tile segments, each tile segment being associated with a tile of the set of tiles. Said method comprises:
- sending to the terminal one or more tile segments of a current video segment for delivering one or more first portions of the scene of the multimedia video comprising a part of the scene to be displayed through a current viewport;
- upon receipt of one or more requests, delivering a halt image of the multimedia video associated with a given moment of the current video segment, said halt image being defined by one or more second portions comprising said one or more first portions.

In an embodiment of the present principles, said method can comprise extracting one or more video frames from tile segments of the current video segment, in order to build the requested halt image.

In an embodiment of the present principles, the halt image can be retrieved from a list of coded images associated with the current video segment.

The present principles also concern a network equipment for streaming a multimedia video spatially tiled with a set of tiles and stored on the network equipment, a tile covering a portion of a scene of the multimedia video, said multimedia video being temporally divided into a plurality of video segments, a video segment being further defined by a plurality of tile segments, each tile segment being associated with a tile of the set of tiles. Said network equipment comprises one or more memories and one or more processors configured to:
- send to the terminal one or more tile segments of a current video segment for delivering one or more first portions of the scene of the multimedia video comprising a part of the scene to be displayed through a current viewport;
- upon receipt of one or more requests, deliver a halt image of the multimedia video associated with a given moment of the current video segment, said halt image being defined by one or more second portions comprising said one or more first portions.

In an embodiment of the present principles, the one or more processors of the network equipment can be further configured to extract one or more video frames from tile segments of the current video segment, in order to build the requested halt image.

Besides, the present disclosure is further directed to a non-transitory program storage device, readable by a computer, tangibly embodying a program of instructions executable by the computer to perform a method for managing, at a terminal, a streaming processing of a multimedia video spatially tiled with a set of tiles and stored on a network equipment, a tile covering a portion of a scene of the multimedia video, said multimedia video being temporally divided into a plurality of video segments, a video segment being further defined by a plurality of tile segments, each tile segment being associated with a tile of the set of tiles, said method comprising:
- processing one or more tile segments of a current video segment for delivering one or more first portions of the scene of the multimedia video comprising a part of the scene to be displayed through a current viewport;
- upon receipt of a command during the processing of the current video segment, retrieving a halt image of the multimedia video associated with a given moment of the current video segment, said halt image being defined by one or more second portions comprising said one or more first portions.

The present disclosure also concerns a computer program product which is stored on a non-transitory computer readable medium and comprises program code instructions executable by a processor for implementing a method for managing, at a terminal, a streaming processing of a multimedia video spatially tiled with a set of tiles and stored on a network equipment, a tile covering a portion of a scene of the multimedia video, said multimedia video being temporally divided into a plurality of video segments, a video segment being further defined by a plurality of tile segments, each tile segment being associated with a tile of the set of tiles,
said method comprising:
- processing one or more tile segments of a current video segment for delivering one or more first portions of the scene of the multimedia video comprising a part of the scene to be displayed through a current viewport;
- upon receipt of a command during the processing of the current video segment, retrieving a halt image of the multimedia video associated with a given moment of the current video segment, said halt image being defined by one or more second portions comprising said one or more first portions.

The method according to the disclosure may be implemented in software on a programmable apparatus. It may be implemented solely in hardware or in software, or in a combination thereof.

Some processes implemented by elements of the present disclosure may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as "circuit", "module" or "system". Furthermore, such elements may take the form of a computer program product embodied in any tangible medium of expression having computer usable program code embodied in the medium.

Since elements of the present disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like.

The disclosure thus provides a computer-readable program comprising computer-executable instructions to enable a computer to perform the method as above mentioned.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

### BRIEF DESCRIPTION OF THE DRAWINGS

The disclosure will be better understood and illustrated by means of the following embodiment and execution examples, in no way limitative, with reference to the appended figures on which:
- Figure 1 is a schematic diagram of an exemplary Client-Server network architecture wherein the present principles might be implemented;
- Figure 2 is a schematic block diagram of an exemplary client terminal wherein the present principles might be implemented;
- Figure 3 is an exemplary delivery system wherein the present principles can be implemented;
- Figure 4 shows an exemplary tile comprising a viewport according to the present principles;
- Figures 5 and 6 show an exemplary tile of set of tiles covering a Virtual Reality video compliant with the present principles;
- Figure 7 is flow chart of an exemplary method used by some embodiments of the present principles for managing streaming of tiled VR video;
- Figure 8 schematically depicts the association of a set of images with a set of video segments for each available video quality of a VR video formatted for adaptive streaming, according to the present principles.

Wherever possible, the same reference numerals will be used throughout the figures to refer to the same or like parts.

### DETAILED DESCRIPTION

The following description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

In the claims hereof, any element expressed as a means and/or module for performing a specified function is intended to encompass any way of performing that function including, for example, a) a combination of circuit elements that performs that function or b) software in any form, including, therefore, firmware, microcode or the like, combined with appropriate circuitry for executing that software to perform the function. It is thus regarded that any means that can provide those functionalities are equivalent to those shown herein.

In addition, it is to be understood that the figures and descriptions of the present disclosure have been simplified to illustrate elements that are relevant for a clear understanding of the present disclosure, while eliminating, for purposes of clarity, many other elements found in typical digital multimedia content delivery methods, devices and systems. However, because such elements are well known in the art, a detailed discussion of such elements is not provided herein. The disclosure herein is directed to all such variations and modifications known to those skilled in the art.

The present disclosure is depicted with regard to a streaming environment to deliver a VR multimedia content (such as a 360° video or a panoramic video) to a client terminal through a delivery network.

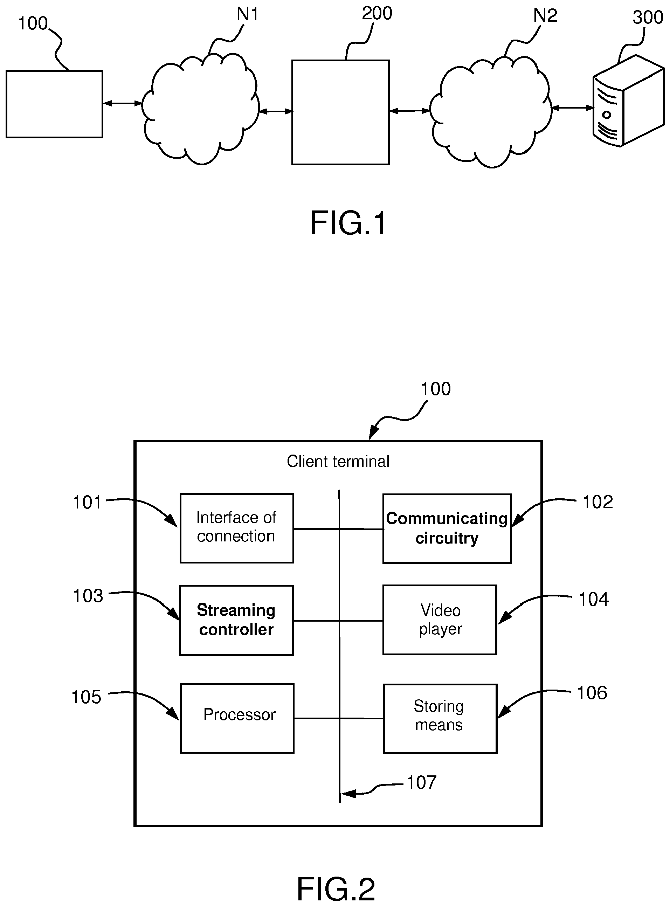

As shown in the example of Figure 1, the Client-Server network architecture, wherein the present principles might be implemented, comprises a client terminal 100, gateway 200 and one or more servers 300 (only one is represented in Figure 1).

The client terminal 100 - connected to the gateway 200 through a first network N1 (such as a home network or an enterprise network) - may wish to request a VR video 10 stored on a network equipment 300 (e.g. a remote server) through a second network N2 (such as the Internet network). The first network N1 is connected to the second network N2 thanks to the gateway 200.

The server 300 streams segments of the VR video 10 to the client terminal 100, upon the client request, using a streaming protocol. In the following, as an illustrative but non-limitative example, adaptive streaming (such as the HTTP adaptive streaming protocol, so called HAS, like MPEG-DASH or HLS) is considered to deliver the VR video 10 to the client terminal 100 from the server 300.

As shown in the example of Figure 2, the client terminal 100 can comprise at least:
- an interface of connection 101 (wired and/or wireless, as for example Wi-Fi, Ethernet, 4G, etc.) to the first network N1;
- a communication circuitry 102 containing the protocol stacks to communicate with the server 300. In particular, the communication module 102 comprises the TCP/IP stack well known in the art. Of course, it could be any other type of network and/or communicating means enabling the client terminal 100 to communicate with the server 300;
- a streaming controller 103 which receives the VR video 10 from the server 300;
- a video player 104 adapted to decode and render the multimedia content;
- one or more processor(s) 105 for executing the applications and programs stored in a non-volatile memory of the client terminal 100;
- storing means 106, such as a volatile memory, for instance for buffering the segments received from the server 300 before their transmission to the video player 104;
- an internal bus 107 to connect the various modules and all means well known to the skilled in the art for performing the generic client terminal functionalities.

As an example, the client terminal 100 is a portable media device, a mobile phone, a tablet or a laptop, a head mounted device, a TV set, a set-top box or the like. Naturally, the client terminal 100 might not comprise a complete video player, but only some sub-elements such as the ones for demultiplexing and decoding the media content and might rely upon an external means to display the decoded content to the end user.

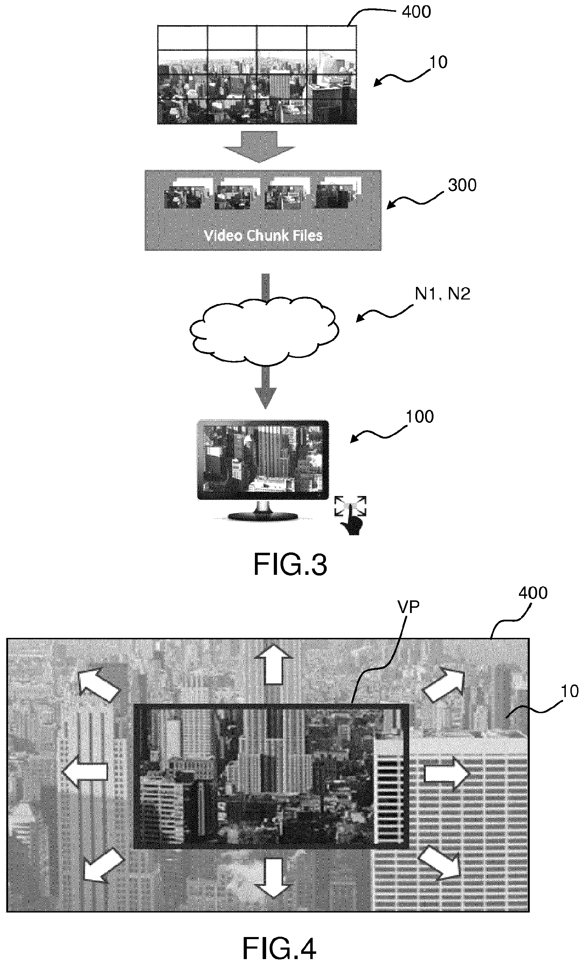

As depicted in Figure 3, in a tile based video service, the VR video 10 (in the shown example of Figure 3, a panoramic video) is spatially sliced into a set of tiles at the server side. The set of tiles covers the whole scene of the VR video 10. The size of the tiles can be defined large enough to allow a variation of the focusing point without being forced to obtain and decode instantaneously another tile. In particular, in the following, it is assumed that one tile delivered to the terminal 100 can cover at least the part of scene (a 360° scene or a panoramic scene) to be displayed through the viewport VP associated with the client terminal 100 requesting the VR video 10 (as shown in the example of Figure 4 compliant with the present principles). Naturally, in a variant, when tiles are smaller than the viewport VP, several tiles might be needed to obtain the part of the scene displayed through the viewport VP.

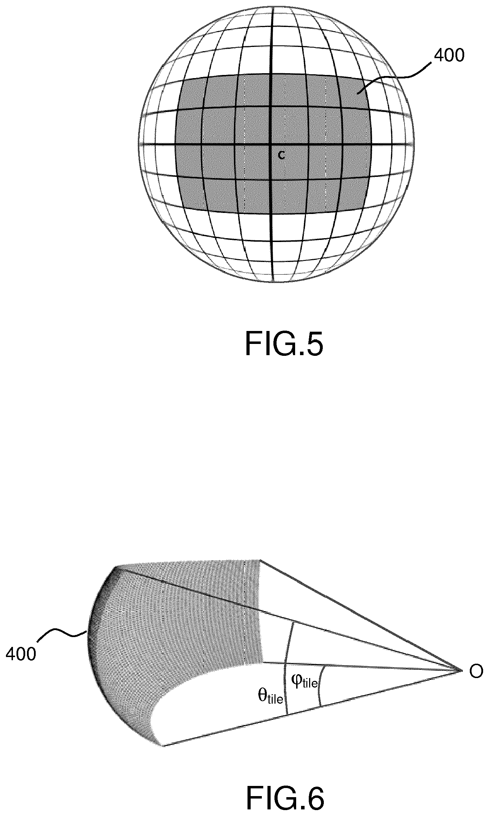

While not mandatory, it is further assumed that an overlap exists between consecutive tiles 400 of the set of tiles. Naturally, while a tile of rectangular shape has been illustrated in Figures 4, the present principles can be applied to any other type of tile shape such as the one shown in Figures 5 and 6.

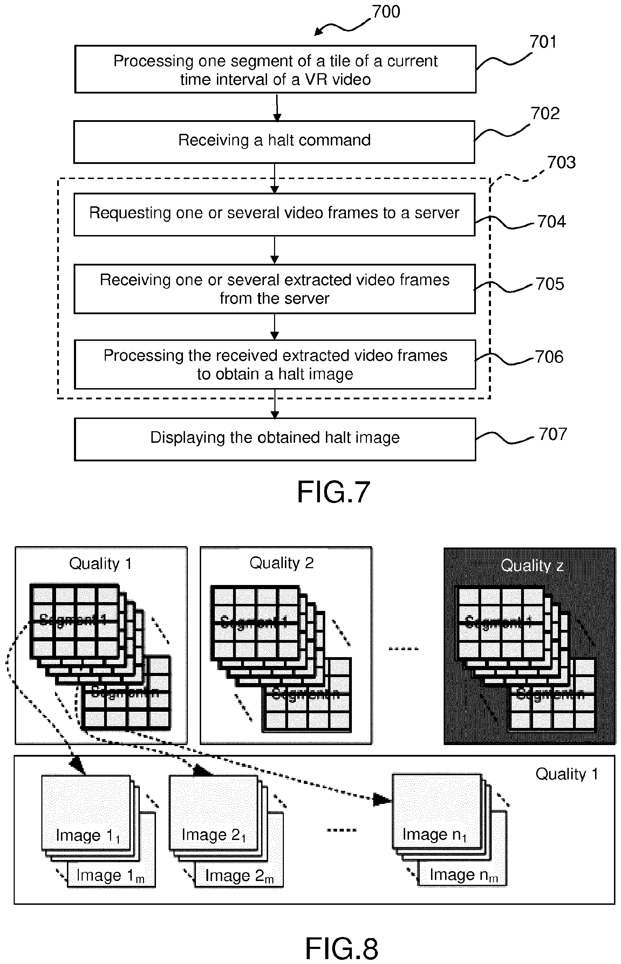

According to the present principles, as shown in Figure 7, the client terminal 100 can be configured to implement a method 700 for managing the streaming processing of a VR video 10 tiled with a set of tiles 400 and stored on the remote server 300. The VR video 10 can be already formatted for adaptive streaming. In particular, the VR video 10 is temporally divided into a plurality of video segments of equal duration, each video segment being available at different video qualities (also called representations) at the server 300.

As shown in Figure 8, for all the available video qualities (Quality 1, Quality 2, ..., Quality z), each video segment 1 to n of the VR video 10 is spatially split in tiles 400 (each tile covering a portion of the VR scene (360° scene or panoramic scene) as illustrated in Figures 3 to 6) according to the same tile arrangement. Each video segment is then defined by a set of tile segments of the same duration to cover the whole 360° scene (each tile segment being available at said different video qualities). Every tile segment - comprising a plurality of coded video frames - is of equivalent duration (e.g. 0,5 second) and starts with an IDR (Instantaneous Decoding Refresh) video frame. Each video frame of a video segment comprises the video frames of the corresponding tile segments defining said video segment.

Besides, within a streaming session of the VR video 10, the client terminal 100 can propose a halt button (e.g. under the form of a popup window) through, for instance, a dedicated user interface or via an appropriate button on a remote controller (not shown in the Figures). When the halt button is selected, the video player 104 of the client terminal 100 can stop playing the VR video 10 which can be frozen. The user can then be allowed to move the viewport to look outside the image displayed when the halt function has been triggered, as described hereinafter.

For example, the VR video 10 can be frozen on the last video frame of a current video segment (said video of frame being composed of one or more video frames of the tile segments associated with the current video segment). The last video frame can correspond to an image of the current video segment either available on the server 300 (and signaled through the MPD) or reconstructed by the client terminal 100 according to some of the following embodiments.

In particular, the client terminal 100 can, in a step 701 of the method 700, process (e.g. with its video player 104 and/or processor(s) 105) one tile segment of the VR video 10 for delivering one first portion of the scene of the video 10 comprising the area displayed through the viewport VP. In that case, it is assumed that the portion of the scene covered by the tile is bigger than the viewport as shown in Figure 4. In a variant, when several tiles are required to cover the viewport, several segments can be processed in step 701.

Upon receipt (step 702) of a halt command (for instance from a user's action on a user interface or on a remote controller), the client terminal 100 can retrieve, in a step 703, a halt image of the multimedia content associated with a given moment of the current video segment and obtained by one or several second portions of the scene comprising or completing the first portion(s).

In the following embodiments of the present principles, a 360° video (having a 360° or spherical scene associated with) is considered. Naturally, the present principles also apply to a panoramic video having a panoramic scene.

### First embodiment for implementation of a halt function

In a first embodiment of the present principles, for retrieving such a halt image, the client terminal 100 can requests (step 704) - (via one or several requests) to the remote 300 - one or several video frames of one or several missing tiles (i.e. tiles not currently used for delivering the first portion(s) of the scene visible through the viewport VP) corresponding to the current video segment (i.e. in which the halt command has been received). The number of video frames (i.e. the number of tiles) requested by the client terminal depends on whether or not a full 360° halt image is desired. These video frames can then be extracted, by the server 300, from tile segments defining the current video segment.

It has to be noted that, when one requested video frame associated with a given tile (different from the tile(s) delivering the first portion(s) of the scene comprising the part of the scene displayed through the viewport VP) is not an IDR picture but rather an intermediate picture (i.e. a P (Predicted) or B (Bi-predicted) picture), the server 300 needs to extract the requested intermediate picture and the dependent pictures (e.g. an image I and possibly an image P according to video compression standard) from the corresponding tile segment. Then, for one single requested picture, several frames will be extracted by the server 300 from the tile segment.

In particular, when the halt image corresponds to a 360° image (i.e. the complete scene), several video frames from several tiles (defining a set of video frames) can be requested by the client terminal 100 to the network 300. The set of video frames may be referenced in two different alternatives.

In a first alternative (referred hereinafter as implicit), the client terminal 100 can request an entire 360° image corresponding to a given instant t (e.g. the instant correspond to the reception of the user's halt command) of the current video segment without explicitly referencing the image. The server 300 can consider (e.g. by convention) that the first IDR video frame of the video segment is requested. In particular, to request the entire 360° image, the client terminal can send either one global request or a plurality of requests to the server 300 to receive corresponding video frames of the missing tiles. For instance, the client terminal 100 can request them from the server 300 in a spiral scan order (i.e. it requests the corresponding video frame of each missing tile starting from the tile adjacent to the tile(s) comprising the part of the scene visible through the viewport (preferably at the equator) and continuing e.g. clockwise order). Other scanning order can further be possible like raster scan (i.e. from the top to the bottom and from the left to the right with respect to the viewport). On the server side, once receiving the requests, the server 300 can perform the extraction of the requested video frames from the corresponding tiles segments of the current video segment.

In a second alternative (referred hereinafter as explicit), the global request or the plurality of requests sent by the client terminal 100 embeds a picture identifier for each missing tile (to cover the 360° scene). For instance, the embedded picture identifier can correspond to an identifier of the IDR picture (which can be extracted from the bit stream using e.g. the IDR_pict_id function according to the H264 video standard) from a specific tile segment. In a variant of the second alternative, the identification of a requested picture can be obtained by identifying any picture beyond an IDR picture by using an off-set Q in addition to the IDR picture identifier, in order to consider the Q picture following the IDR picture (Q being an integer between 1 and G-1 wherein G represents the number of pictures of the Group Of Picture (GOP) size that must be unique and known by both the server 300 and the client terminal 100 to identify the video frame within the GOP).

In a variant or in a complement compliant with the first embodiment, the client terminal 100 can send only one request (implicit or explicit) without specifying the missing tiles. In that case, the server 300 is configured to remember the list of tiles that have already been sent for the last GOP (e.g. thru the managing of a dedicated memory), in order to extract the video frames from all the other missing tiles and send them to the client terminal 100.

Whatever the type of halt image (i.e. halt image corresponding to a full 360° image representing the complete scene or a partial 360° image representing a part of the scene), once the client terminal 100 has received (step 705) the one or several extracted video frames from the server 300, it can process (step 706) the extracted frames to build the halt image.

When the halt image (full 360° image or part of it) is obtained, the client terminal can display (step 707) it to the user to offer him the possibility to discover the displayed halt image through the viewport VP.

### Second embodiment for implementation of halt function

In a second embodiment of the present principles, for retrieving the halt image, the client terminal 100 can directly request the halt image to the server 300 by sending an appropriate request.

Upon receipt of such a request for a halt image, the server 300 extracts the corresponding video frames from the tile segments of the missing tiles associated with the current video segment. The number of video frames used to build the requested halt image depends on the nature of the halt image (a full 360° image or a partial 360° image). The identification of the pictures required to build the requested halt image can be obtained thanks to the first and second alternative as above described.

Once the halt image is obtained, the server 300 can deliver it to the requesting client terminal 100 for display.

It should be noted that the implementation of this second embodiment can be simple as long as the requested video frames correspond to IDR (or I) pictures. When the client's request points out an intermediate picture (P or B picture), then the extraction process becomes more complex. The server 300 needs to re-encode the new image operating all the video frames involved in the coding of the intermediate picture. One alternative consists in configuring the server 300 to send back - to the client terminal 100 - the complete GOP of the halt image related to the requested intermediate picture coding, so that the client terminal is in charge of decoding the GOP again for creating the halt image.

Since sending the complete GOP can be costly (the GOP includes intermediate images that are never displayed), in many coding schemes, it is possible to remove some of these intermediates images (since they are not used as reference for the decoding of the targeted image). The list of mandatory images can be obtained by starting from the targeted image, listing the images needed as reference to decode it, and building the backward reference chain by iterating on the list.

### Third embodiment for implementation of the halt function

In a third embodiment compliant with the present principles, instead of relying on the extraction of the missing tile's frames to form the complete scene, the server 300 can host a pre-built set of coded images from which a halt image can be selected.

As shown in Figure 8, according to the third embodiment, a set of m 360° still images is associated with each video segment of the VR video 10. These 360° images are numbered 1₁ to 1ₘ on Figure 8, m being comprised within [1, S] with S the number of frames of a video segment. Depending on the client's request embodiment, a 360° image may correspond to a coded IDR picture, a coded I picture or even any picture in time interval 1. In a variant or complement, while, in the Figure 8, images with only one quality (e.g. the highest quality offering the highest resolution) are considered for each video segment of the VR video 10, images with different qualities can be associated to form a 360° halt image. This can allow to retrieve and display the requested halt image as fast as possible in the terminal according to the terminal capabilities and/or the available network bandwidth.

Having a pre-built set of coded images can allow to deliver any 360° image corresponding to an intermediate picture, without additional processing for the server (such as image extraction as described in the first and second embodiment).

Since the storage of the pre-built set of coded images can be costly for the server 300, one alternative to limit the cost of storage can rely on having only a subset of coded images corresponding to some defined instants of the considered video segment in order to deliver the coded image which is the closest in time distance with respect to, for instance, the moment of reception of the halt image request.

### Fourth embodiment for implementation of the halt function

In a fourth embodiment of the present principles, upon receipt of the user's halt action, the client terminal 100 (i.e. via a software agent) can freeze the decoding process to display the last decoded video frame of the current video segment (so called hereinafter frozen frame). As previously described, only the tile(s) comprising the part of the scene displayed by the viewport VP have been downloaded at the client side from the server 300. After the user's halt request, the client terminal 100 knows the one or more tile segments of the current video segment which have already been requested and received. The client terminal 100 can therefore request the missing tiles of the current video segment, in order to build and to display the entire 360° halt image associated with the frozen frame. The total time to retrieve the 360° image will be N times the duration for loading a tile segment at given quality, with N being the number of missing tiles.

The client terminal 100 can start the downloading of the tile segments of the missing tiles by considering the viewport (i.e. the region of interest where the user is focused on). The requests coming from the client terminal 100 concern always the same video segment (i.e. the current video segment).

In case tile segments of missing tiles are successively downloaded following the user's focus, the client terminal 100 can progressively process the received tile segments to display a halt image corresponding to part of the 360° scene. The user does not need to wait the complete download of all the tile segments of the missing tiles (defining the current video segment) before moving the region of interest (displayed by the viewport VP) within the displayed halt image. The halt image is then updated with the further received segments and the display is updated accordingly.

In the fourth embodiment, there is no additional processing at the server 300, nor impact on the streaming protocol (i.e. nothing special has to be described in a manifest or MPD).

Because the frozen tile segment image (i.e. image displayed when the halt function is activated) may correspond to an intermediate video frame, the client terminal 100 needs to retrieve the entire tile segment(s) for decoding the video frame(s) associated with the frozen instant to form the halt image (360° image or part of the 360° scene). Thus, to retrieve a video frame from a tile segment, the client terminal 100 needs to receive the part of the tile segment useful for decoding the considered video frame. This allows the client terminal to extract and recompose the 360° image (or part of it) corresponding to the frozen video frame even if the latter corresponds to an intermediate coded picture (i.e. not an IDR or I picture).

Whatever the considered embodiment, in a variant or complement compliant with the present principles, halt possibilities (i.e. images that can be displayed on a halt) offered to the user can be listed in the MPD thanks to new anchor (called halt anchors,) in order to notify the user when a halt is authorized and possible. In that case, the user does not have the freedom to choose any positions in the VR video 10. To notify the user that a halt experience is available (at a given anchor time), the client terminal can trigger the display of a popup window and/or an appropriate symbol, or a predefined sound, or the like.

Anchor images containing the whole 360° content are stored at the server side. This prevents too huge storage needs (only the predefined anchor images are stored) and does not require a lot of computational resources. It also allows to prepare dedicated audio content when relevant.

When the halt experience ends (after a pre-defined duration or on user action, such as Play), the client terminal 100 can resume the video streaming session and continue to play the VR video 10 from the current timestamp (for example the same timestamp or moment as when video was frozen and the halt function was triggered). The VR video can continue either with the saved viewport VP, i.e. the viewport when the halt function was activated, or with the current viewport VP, i.e. the viewport when the halt ends.

For instance, a user interface operated by the client terminal 100 can allow the user to resume the playback of the VR video from where he is currently focusing or from where he was focusing when the halt function was triggered.

To enable the resuming of the video session from where the user was focusing before the halt action, the client terminal needs to save the video buffer state and content when the halt function was triggered.

To resume the playback from the current viewport, the client terminal 100 needs to download the tile segment(s) corresponding to the current viewport, as it does when it starts a new streaming session.

Whatever the considered embodiment, to enhance the halt experience, in a complement compliant with the present principles, an audio stream can be downloaded and played by the client terminal 100. For instance, such an audio stream can be dedicated to the halt experience or can be extracted from the original audio track (e.g. the last N seconds preceding the frozen image but attached to the same video scene).

In a further variant or complement, the halt duration can be bound in time (e.g. to 30 seconds) in order to limit the corresponding server's buffering in case of live streaming and/or to better control the user experience (e.g. audio track duration). It can also be part of the scenario (e.g. the director of the multimedia content does not want the user stops/waits too long in a scene).

Besides, when the four embodiments are implemented relying on an adaptive streaming protocol such as MPEG-DASH, the client terminal can be informed of the halt function availability.

In the illustrative but non-limitative example of the MPEG-DASH implementation to offer a halt experience to a user, a related halt information can be described in the manifest or MPD received by the client terminal 100. In a variant, halt information can also be arranged within metadata associated with received video segments.

Based on the MPD information, the client terminal 100 can be aware of halt experience availability and can then be able to construct the halt requests accordingly depending on the considered embodiment.

In particular, the DASH trick mode (supporting fast forward, seek, rewind and other operations in which typically the media, especially video, is displayed in a speed other than the normal playout speed as specified in the standard ISO-IEC 23009-1) can be used to signal relevant adaptation sets in the MPD.

For each representation within a dedicated adaptation set, the *@MaxPlayoutRate* attribute shall have the value 0 as video streaming is stopped.

An extract of MPD example for halt trick mode definition in adaption set is shown in the table below:

**Table 1: MPD example for halt trick mode definition in adaption set**

| |
|---|
| ```
 <!-- Halt dedicated part -->
 <AdaptationSet id="n" segmentAlignment="true"
 bitstreamSwitching="true" maxWidth="3840" maxHeight="2160"
 par="16:9" lang="und">
 <EssentialProperty
 schemeIdUri="http://dashif.org/guidelines/trickmode" value="1" />
 ...
``` |

Depending on the embodiments previously described, the information embedded in the MPD and the client halt request may vary.

For the first embodiment, the client terminal 100 can build the same request as for any segment of a tile with the addition of the picture Timestamp (or Pictureld) as depicted in the example of Table 2.

**Table 2: MPD example for halt experience**

| |
|---|
| ```
 <?xml version="1.0"?>
 <MPD xmlns="urn:mpeg:dash:schema:mpd:2011" minBufferTime="PT1.500S"
 type="static" mediaPresentationDuration="PT0H1M49.000S"
 maxSegmentDuration="PT0H0M0.500S"
 profiles="urn:mpeg:dash:profile:full:2011">
 <Period duration="PT0H1M49.0000S">
  <AdaptationSet id="1" segmentAlignment="true"
  bitstreamSwitching="true" maxWidth="3840" maxHeight="2160"
  maxFrameRate="30" par="16:9" lang="und">
   <!--SegmentTemplate
   initialization="www/example.com/Content_Name/Repr1/Content_Name_Repr
   1_TileId_dash_init.mp4"/-->
   <!--Representation id="1" mimeType="video/mp4"
   codecs="avc3.640033" width="3840" height="2160" frameRate="30"
   sar="1:1" startWithSAP="1" bandwidth="25286439">
    <SegmentTemplate timescale="30000"
    media="www/example.com/Content_Name/
    Repr1/Content_Name_Repr1_Tileld_$Number$.m4s" startNumber="1"
    duration="15000"
    initialization="www/example.com/Content_Name/Repr
    1/Content_Name_Repr1_Tileld_dash_init.mp4"/>
   </Representation>
   <!--SegmentTemplate
   initialization="www/example.com/Content_Name/Repr2/Content_Name_Repr
   2_Tileld_dash_init.mp4"/-->
   <!--Representation id="2" mimeType="video/mp4"
   codecs="avc3.640033" width="3840" height="2160" frameRate="30"
   sar="1:1" startWithSAP="1" bandwidth="20300648">
    <SegmentTemplate timescale="30000"
    media="www/example.com/Content_Name/
    Repr2/Content_Name_Repr2_Tileld_$Number$.m4s" startNumber="1"
    duration="15000"
    initialization="www/example.com/Content_Name/Repr2/Content_Name_Repr
    2_Tileld_dash_init.mp4"/>
   </Representation-->
   ... </AdaptationSet>
   <!-- Halt dedicated part -->
   <AdaptationSet id="2" segmentAlignment="true"
   bitstreamSwitching="true" maxWidth="3840" maxHeight="2160"
   par="16:9" lang="und">
   <EssentialProperty
   schemeIdUri="http://dashif.org/guidelines/trickmode" value="1" />
   <Representation id="5" mimeType="image/jpeg" width="3840"
   height="2160" sar="1:1" startWithSAP="1" maxPlayoutRate="0">
    <SegmentTemplate
    media="www/example.com/Content_Name/Repr5/Content_Name_Repr5_
    $Picture_Id$.jpeg" startNumber="1" />
   </Representation>
 ... </Period>
 </MPD>
``` |

In addition, Table 3, shown hereinafter, proposes an illustrative but non limitative example of a GET request for a 360° image stored at the server 300 with Picture_id equal to 1, when the client terminal needs to indicate the tile(s) required to build the halt image (in that case, the server does not need to store the already delivered tile(s)).

**Table 3: GET example for 360° image stored at the server with Picture id=1**

| |
|---|
| ```
 GET Content_Name/Repr5/Content_Name_Repr5_TileId_1.jpeg HTTP/1.1
 Host: www.example.com
 Connection: keep-alive
 User-Agent: Mozilla/5.0 (Windows NT 6.1; Win64; x64)
 AppleWebKit/537.36 (KHTML, like Gecko) Chrome/60.0.3112.113
 Safari/537.36
 Accept: image/jpeg;q=0.9,image/*;q=0.8
 Accept-Encoding: gzip, deflate
 Accept-Language: fr-FR,fr;q=0.8,en-US;q=0.6,en;q=0.4
``` |

For the second and third embodiments, MPD signalization and client requests can be the same. The following Table 4 provides an illustrative example of a MPD according to the present principles in that case.

**Table 4: MPD example for halt experience**

| |
|---|
| ```
 <?xml version="1.0"?>
 <MPD xmlns="urn:mpeg:dash:schema:mpd:2011" minBufferTime="PT1.500S"
 type="static"
     mediaPresentationDuration="PT0H1M49.000S"
     maxSegmentDuration="PT0H0M0.500S"
     profiles="urn:mpeg:dash:profile:full:2011">
 <ProgramInformation moreInformationURL="http://www.example.com/info">
   <Title>Example Title</Title>
 </ProgramInformation>
 <Period duration="PT0H1M49.000S">
  <AdaptationSet id="1" segmentAlignment="true" bitstreamSwitching="true"
      maxWidth="3840" maxHeight="2160" maxFrameRate="30" par="16:9"
      lang="und">
   <SegmentTemplate
   initialization="www.example.com/Content_Name/Content_Name_TileId_init.mp4"/>
    <Representation id="1" mimeType="video/mp4" codecs="hev1.1.2.H150.0"
        width="3840" height="2160" frameRate="30" sar="1:1"
        startWithSAP="1" bandwidth="18242666">
      <SegmentTemplate timescale="30000"
      media="www/example.com/Content_Name/Repr1/Content_Name_TileId_$Number$.m4s"
          startNumber="1" duration="15000"/>
    </Representation>
    <Representation id="2" mimeType="video/mp4" codecs="hev1.1.2.H150.0"
    width="3840" height="2160" frameRate="30" sar="1:1"
        startWithSAP="1" bandwidth="14422148">
      <SegmentTemplate timescale="30000"
      media="www/example.com/Content_Name/Repr2/Content_Name_TileId_$Number$.m4s"
          startNumber="1" duration="15000"/>
    </Representation>
    ... </AdaptationSet>
  <!-- Halt dedicated part -->
  <AdaptationSet id="2" segmentAlignment="true" bitstreamSwitching="true"
      maxWidth="3840" maxHeight="2160" par="16:9" lang="und">
    <EssentialProperty schemeIdUri=http://dashif.org/guidelines/trickmode
        value="1" />
    <Representation id="5" mimeType="image/jpeg"
        width="3840" height="2160" sar="1:1"
        startWithSAP="1" maxPlayoutRate="0">
      <Segment Template
      media="www/example.com/Content_Name/Repr5/Content_Name_$Time$.jpeg"/>
    </Representation>
  </Period>
  </MPD>
``` |

In addition, Table 5, shown hereinafter, proposes an illustrative example of a GET request for a 360° image stored at the server 300 with Timestamp equal to 110500.

**Table 5: GET example for 360° image stored at the server with Timestamp=110500**

| |
|---|
| ```
 GET Content_Name/Repr5/Content_Name_110500.jpeg HTTP/1.1
 Host: www.example.com
 Connection: keep-alive
 User-Agent: Mozilla/5.0 (Windows NT 6.1; Win64; x64)
 AppleWebKit/537.36 (KHTML, like Gecko) Chrome/60.0.3112.113
 Safari/537.36
 Accept: image/jpeg;q=0.9,image/*;q=0.8
 Accept-Encoding: gzip, deflate
 Accept-Language: fr-FR,fr;q=0.8,en-US;q=0.6,en;q=0.4
``` |

In a tile based video streaming (such as adaptive streaming), the present principles can propose to a user a halt button (through a user interface or a controller) to trigger a halt function. When the halt function is activated, the video player of the client terminal stops playing the VR video which is frozen (e.g. on the last decoded video frame). The user may then move the viewport to look outside the image displayed when he triggered the halt function. The halt image (replacing or completing the currently displayed image) can have the same quality as the currently displayed image.

When triggering the halt function of the present principles, a user can then be allowed to pan across the VR frozen video to discover the scene, especially when the halt image is a 360° image covering the whole scene.

Contrary to the well-known pause function, the halt function of the present principles can pause the streaming of the VR video to let the user virtually roam within the 360° scene of the retrieved halt image.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the method and device described. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

Although certain embodiments only of the disclosure have been described herein, it will be understood by any person skilled in the art that other modifications, variations, and possibilities of the disclosure are possible. Such modifications, variations and possibilities are therefore to be considered as falling within the spirit and scope of the disclosure and hence forming part of the disclosure as herein described and/or exemplified.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

## Claims

1. A method for managing, at a terminal (100), a streaming processing of a multimedia video (10) spatially tiled with a set of tiles (400) and stored on a network equipment (300), a tile (400) covering a portion of a scene of the multimedia video, said multimedia video being temporally divided into a plurality of video segments (Segment 1, ..., Segment n), a video segment being further defined by a plurality of tile segments, each tile segment being associated with a tile (400) of the set of tiles, said method comprising:
- processing (701) one or more tile segments of a current video segment (Segment 1, ..., Segment n) for delivering one or more first portions of the scene of the multimedia video comprising a part of the scene to be displayed through a current viewport (VP);
- upon receipt (702) of a command during the processing of the current video segment, retrieving (703) a halt image of the multimedia video associated with a given moment of the current video segment (Segment 1, ..., Segment n), said halt image being defined by one or more second portions comprising said one or more first portions.

2. The method according to claim 1, wherein said halt image corresponds to the complete scene of the multimedia video.

3. The method according to claim 1 or 2, wherein the retrieving (703) comprises requesting said halt image to the network equipment (300).

4. The method according to claim 3, wherein the requesting of said halt image to the network equipment (300) comprises sending a picture identifier to the network equipment.

5. The method according to claim 3, wherein the halt image is retrieved, at the network equipment (300), from a list of coded images associated with the current video segment (Segment 1, ..., Segment n).

6. The method according to claim 1 or 2, wherein the retrieving comprises requesting (704) one or more additional tile segments of the current video segment in order to build the requested halt image at the terminal (100).

7. The method according to claim 1 or 2, wherein the retrieving comprises receiving (705), after sending (704) one or more requests, one or more video frames extracted, by the network equipment (300), from corresponding tile segments of the current video segment.

8. A terminal for managing a streaming processing of a multimedia video (10) spatially tiled with a set of tiles (400) and stored on a network equipment (300), a tile (400) covering a portion of a scene of the multimedia video, said multimedia video being temporally divided into a plurality of video segments (Segment 1, ..., Segment n), a video segment being further defined by a plurality of tile segments, each tile segment being associated with a tile (400) of the set of tiles,
said terminal comprising one or more memories and one or more processors configured to:
- process (701) one or more tile segments of a current video segment (Segment 1, ..., Segment n) for delivering one or more first portions of the scene of the multimedia video comprising a part of the scene to be displayed through a current viewport (VP);
- upon receipt (702) of a command during the processing of the current video segment, retrieve (703) a halt image of the multimedia video associated with a given moment of the current video segment (Segment 1, ..., Segment n), said halt image being defined by one or more second portions comprising said one or more first portions.

9. The terminal according to claim 8, wherein said halt image corresponds to the complete scene of the multimedia video.

10. The terminal according to claim 8 or 9, wherein the retrieving (703) comprises requesting said halt image to the network equipment (300).

11. A method for streaming, from a network equipment (300), a multimedia video (10) spatially tiled with a set of tiles (400) and stored on the network equipment, a tile (400) covering a portion of a scene of the multimedia video, said multimedia video being temporally divided into a plurality of video segments (Segment 1, ..., Segment n), a video segment being further defined by a plurality of tile segments, each tile segment being associated with a tile (400) of the set of tiles, said method comprising:
- sending to the terminal (300) one or more tile segments of a current video segment (Segment 1, ..., Segment n) for delivering one or more first portions of the scene of the multimedia video comprising a part of the scene to be displayed through a current viewport (VP);
- upon receipt (702) of one or more requests, delivering a halt image of the multimedia video (10) associated with a given moment of the current video segment (Segment 1, ..., Segment n), said halt image being defined by one or more second portions comprising said one or more first portions.

12. The method according to claim 11, comprising extracting one or more video frames from tile segments of the current video segment, in order to build the requested halt image.

13. The method according to claim 11, wherein the halt image is retrieved from a list of coded images associated with the current video segment.

14. A network equipment for streaming a multimedia video (10) spatially tiled with a set of tiles (400) and stored on the network equipment (300), a tile (400) covering a portion of a scene of the multimedia video, said multimedia video being temporally divided into a plurality of video segments (Segment 1, ..., Segment n), a video segment being further defined by a plurality of tile segments, each tile segment being associated with a tile (400) of the set of tiles,
said network equipment (300) comprising one or more memories and one or more processors configured to:
- send to the terminal (300) one or more tile segments of a current video segment (Segment 1, ..., Segment n) for delivering one or more first portions of the scene of the multimedia video comprising a part of the scene to be displayed through a current viewport (VP);
- upon receipt (702) of one or more requests, deliver a halt image of the multimedia video (10) associated with a given moment of the current video segment (Segment 1, ..., Segment n), said halt image being defined by one or more second portions comprising said one or more first portions.

15. The network equipment according to claim 14, wherein the one or more processors are further configured to extract one or more video frames from tile segments of the current video segment, in order to build the requested halt image.
